# EUROPEAN PATENT APPLICATION

(11) **EP 1 034 835 A1**
(43) Date of publication of application: **13.09.2000**
(21) Application number: 00200758.1
(22) Date of filing: 03.03.2000
(51) Int. Cl.: B01D 65/02, B01D 65/04, B01D 29/62, B01D 29/66

(54) **Method of cleaning solid/liquid separation element and solid/liquid separation apparatus**

(30) Priority: 05.03.1999 JP 5909499
(71) Applicant: BIOTHANE SYSTEMS INTERNATIONAL B.V., NL-2623 EW Delft (NL)
(72) Inventor: Takahashi, Kazuyoshi, Sumitomo Heavy Ind., Ltd., Hiratsuka, Kanagawa (JP)
(74) Representative: Ottevangers, Sietse Ulbe

(57) **Abstract**

It is an object of the invention to provide a method of cleaning a solid/liquid separation element and a solid/liquid separation apparatus capable of sufficiently preventing clogging of a solid/liquid separation element using a membrane, a filter cloth or the like.

In a method of cleaning an element 3 for cleaning the solid/liquid separation element 3 arranged to dip in water to be treated 2 in a treatment water tank 1 by fluidizing floated solids 9 in the water to be treated 2, the element 3 is backwashed by supplying cleaning water to an inner portion of the element 3. In this case, clogged matters at the inner portion of the element 3 are expelled and simultaneously therewith, adhered matters adhered onto the surface of the element 3 are expanded to an outer side. The expanded adhered matters are easily peeled off by the floated solids 9.

## Description

The present invention relates to a method of cleaning a solid/liquid separation element such as a membrane or a filter cloth arranged to dip in water to be treated of a treatment water tank and a solid/liquid separation apparatus.

Although there have been many methods as methods of separating particles present in waste water or the like from the waste water or separating substances dissolved in water, as a representative method, there is a method of using a solid/liquid separation element such as a membrane, a filter cloth or the like. The method is provided with many advantages in which in separating suspended substances, biological sludge, flocculated sludge or the like in water to be treated, clarified treated water is stably obtained, concentration of sludge can be carried out and so on. Further, when a reverse osmosis membrane or the like is used, substances dissolved in water can also be separated.

Among the membrane separation methods, as a method particularly attracting attention, there is provided a method of a dipped membrane. According to the method, a membrane element is arranged to dip in water to be treated contained in the treatment water tank and the membrane permit only water in the water to be treated to permeate as treated water. In this case, the treated water is permeated by applying pressure on the side of the water to be treated of the membrane or exerting sucking force from the side of the treated water of the membrane.

However, when the water to be treated is intended to filtrate in the dipped membrane method, suspended substances or high molecular substances in the water to be treated remain at a membrane face, are gradually adhered to or are concentrated on the membrane face to thereby deteriorate the permeating function of the membrane element.

Hence, in the dipped membrane method, there has been proposed to also use a method of cleaning the membrane element in which a floated solid of plastic or the like is charged into the treatment water tank, aeration is carried out by supplying gas of air or the like from below of a hollow fiber membrane element, the floated solid is fluidized by a lift operation or an agitation operation and a shear force is exerted by making the floated solid collide with the membrane face to thereby prevent solid matters or the like from adhering to the membrane face (JP-A-6-182396).

However, according to the method of cleaning a membrane element in the conventional dipped membrane method, mentioned above, there is a concern of destructing the membrane face when the shear force of collision exerted on the membrane face by the floated solid becomes large and the collision force cannot be made large excessively. Therefore, solid matters adhered to the membrane face are liable to remain and when the membrane separation is continued, adherence of solid matters is progressed and a filtration resistance becomes large. Further, even when the surface of the membrane can be peeled off by the floated solid, very small particles which have invaded the inner portion of the membrane cannot be removed. Accordingly, the membrane separation treatment cannot be continued over a long period of time. Particularly, when the treatment is carried out by reducing an amount of using a separation element such as a membrane or the like and increasing the filtration rate in order to achieve compact formation and low cost formation of the apparatus, the clogging phenomenon significantly occurs and its improvement has been desired.

Hence, in view of the above-described situation, it is an object of the present invention to provide a method of cleaning a solid/liquid separation element and a solid/liquid separation apparatus capable of sufficiently preventing clogging of a solid/liquid separation element such as a membrane, a filter cloth or the like.

In order to achieve the above-described object, the invention is featured in a method of cleaning a solid/liquid separation element for cleaning the solid/liquid separation element arranged to dip in water to be treated in a treatment water tank by fluidizing a floated solid in the water to be treated wherein the solid/liquid separation element is backwashed by supplying cleaning water intermittently to an inner portion of the solid/liquid separation element.

According to the invention, when the solid/liquid separation element is backwashed by supplying the cleaning water intermittently to the inner portion of the solid/liquid separation element, clogged matters at the inner portion of the element for separation are expelled by the cleaning water. Further, adhered matters adhered onto the surface of the solid/liquid separation element are pushed out to an outer side and expanded. At this occasion, on the outer side of the solid/liquid separation element, the floated solid is fluidized and accordingly, the expanded adhered matters are easily peeled off by the floated solid.

According to the above-described cleaning method, when the solid/liquid separation element comprises a plurality of solid/liquid separation elements, it is preferable to backwash the solid/liquid separation element by supplying the cleaning water successively to every portion of the plurality of solid/liquid separation elements. In this case, during a time period of backwashing, only a portion of the solid/liquid separation element is always backwashed and the remaining solid/liquid separation elements are not backwashed. Therefore, cleaning of the solid/liquid separation element and continuous treatment of the water to be treated can simultaneously be carried out. Further, in comparison with a case in which all of the solid/liquid separation elements are simultaneously backwashed, am amount of supplying the cleaning water can be saved and downsizing of a pump of the like used in supplying the cleaning water can be achieved.

Further, The invention is featured in a solid/liquid separation apparatus comprising a treatment water tank, a solid/liquid separation element arranged to dip in water to be treated in the treatment water tank, a floated solid present in the water to be treated, an air supply device for fluidizing the floated solid by supplying a gas to the water to be treated and discharging means for discharging treated water produced by subjecting the water to be treated to solid/liquid separation by the solid/liquid separation element from the treatment water tank, further comprising cleaning water supplying means for supplying cleaning water to an inner portion of the solid/liquid separation element. It is preferable in the above-described solid/liquid separation apparatus that the solid/liquid separation element comprises a plurality of solid/liquid separation elements and the cleaning water supplying means can supply the cleaning water to every portion of the solid/liquid separation element. According to the invention of the apparatus, the above-described cleaning method can effectively be carried out.

In the practice of the operation of the membrane filtration, when a constant flow rate of air is normally discharged from the diffusing pipes, there may occur a situation, in which there are portions having a large flow speed of air and water and portions having a small flow speed thereof on the membrane face. That is, air flow and water flow are not sufficiently distributed over a total of the surface of the membrane of the membrane element. Further, since the constant flow rate of air is discharged, a direction of the water flow relative to the membrane face of the membrane element becomes substantially constant. As a result, clogging of the membrane becomes partially significant, there causes a need of cleaning the membrane at an early stage and frequently and a long time period of stable operation of the membrane separation apparatus becomes more difficult.

Hence, in view of the above-described situation, it is a further object of the invention to provide a membrane separation apparatus and a method of cleaning a membrane thereof capable of carrying out a long time period of stable operation of the membrane separation apparatus by sufficiently preventing clogging of the membrane over a total of the membrane face.

In order to achieve the above-described object, a method of cleaning a membrane according to the invention is featured in that the membrane element is cleaned by aerating a gas discharged via a plurality of diffusing ports, the diffusing ports for discharging the gas are switched at least one time. In this embodiment, "switching" signifies that while gas remains to discharge from portions of diffusing ports, gas is started to discharge from remaining diffusing ports.

According to the constitution, discharge and stop of gas from the respective diffusing ports is repeatedly carried out by switching the diffusing ports for discharging the gas. Therefore, intensities of air flow and water flow are frequently changed in respect of the surface of the membrane of the membrane element. Further, by switching the diffusing ports for discharging air, positions of aeration are changed, and positions of portions of much aeration and positions of portions of little aeration in the membrane element are changed and a path of circulating water flow is changed.

According to a further embodiment of the invention the problem is addressed, that according to the conventional membrane filtration apparatus, in injecting the chemical solution into the flat membrane element, not only treated water remaining in the flat membrane element constitutes a resistance and flow of the chemical solution is hampered by the treated water but also the chemical solution is diluted.

Therefore, a time period for the chemical solution having a sufficient concentration to reach the rear side of the membrane face is prolonged and accordingly, a time period required for cleaning is prolonged but also the cost of the membrane filtration apparatus becomes high. Further, the chemical solution cannot be uniformly supplied to all the region in the flat membrane element and accordingly, the membrane face cannot be cleaned sufficiently uniformly.

According to a further aspect of the invention, there is provided a membrane filtration apparatus characterized by chemical solution injecting means for injecting a chemical solution into the membrane element via the first line and a second line connected to a portion of the membrane element different from a portion connected with the first line for discharging the water to be treated in the membrane element.

In a first embodiment a chemical solution tank is connected to the first line and a level of the chemical solution in the chemical solution tank is made higher than the second line. In a second embodiment a chemical solution tank is connected to the first line and a level of the chemical solution in the chemical solution tank is made lower than the second line. In a third embodiment the first line and the second line are connected to portions on a diagonal line of the membrane element.

An explanation will be given of embodiments of solid/liquid separation apparatus according to the invention as follows. Further, in all the drawings, same or equivalent constituent elements are attached with the same notations and a duplicated explanation thereof will be omitted.

### Brief Description of the Drawings

Fig. 1 is an outline sectional view showing an embodiment of a solid/liquid separation apparatus according to the invention.
Fig. 2 is a flowchart showing an embodiment of a method of cleaning a solid/liquid separation element according to the invention.
Fig. 3 is an outline sectional view showing other embodiment of a solid/liquid separation apparatus according to the invention.
Fig. 4 is a flowchart showing other embodiment of a method of cleaning a solid/liquid separation element according to the invention

### Description of the Reference Numerals and Signs

1···Treatment water tank, 2···Water to be treated, 3···Membrane element (solid/liquid separation element), 4···Diffusing pipe (air supply apparatus), 7,15···Sucking valves (discharging means), 8···Sucking pump (discharging means), 9···Floated solid, 10···Cleaning water storing source (cleaning water supplying means), 11,16···Backwash valves (cleaning water supplying means), 12···Backwash pump (cleaning water supplying means), 14···Cleaning water, L2···Line (air supply apparatus), 5···Air supply source (air supply apparatus), L3,L8···Water collecting pipes (discharging means), L4,L6···Discharge lines (discharging means), L5,L7···Backwash lines (cleaning water supplying means).

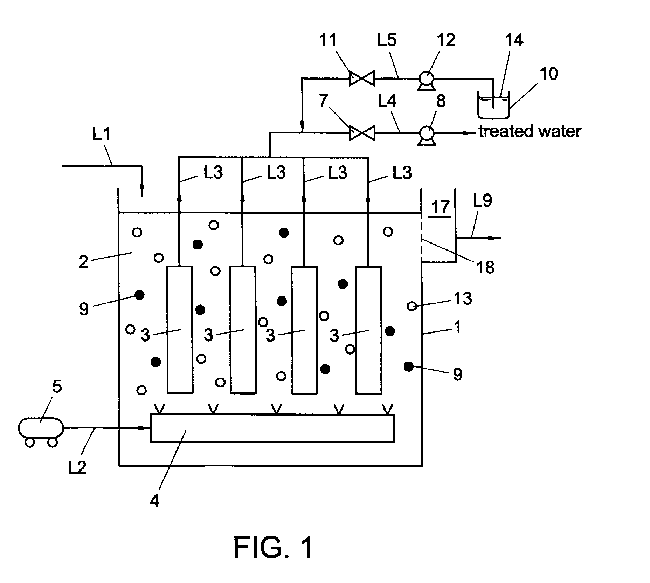

Fig. 1 is an outline sectional view showing a membrane separation apparatus as an example of a solid/liquid separation apparatus. As shown by Fig. 1, the membrane separation apparatus is installed with a treatment water tank 1 and a water to be treated supplying line L1 for supplying water to be treated 2 into the treatment water tank 1. Activated sludge is charged into the treatment water tank 1 such that organic matters in the water to be treated 2 can be decomposed. For that purpose, in order to adjust a concentration of the activated sludge in the treatment water tank 1, a side face of the activated sludge treatment water tank 1 is installed with a sludge discharging groove 17. The sludge discharging groove 17 is for storing sludge discharged from the treatment water tank 1 through a net 18 and is connected to a sludge discharging line L9.

In the treatment water tank 1, a plurality (4 sheets in Fig. 1) of membrane elements (solid/liquid separation elements) 3 in a flat plate shape are parallelly installed at pertinent intervals. The membrane element 3 is for separating the water to be treated 2 into treated water and solid matters and as a membrane used in the membrane element 3, there is used, for example, a reverse osmosis membrane (RO membrane), a nano filtration membrane (NF membrane), an ultrafiltration membrane (UF membrane) or a micro filtration membrane (MF membrane).

Each of the membrane elements 3 is connected with a water collecting pipe L3 and the water collecting pipes L3 are connected to one discharge line L4. The discharge line L4 is attached with a sucking valve 7 and a sucking pump 8. Further, treated water may be discharged by utilizing water pressure of the treatment water tank 1 without using the sucking pump 8.

A diffusing pipe 4 for generating air bubbles 13 are arranged below the membrane elements 3 and the diffusing pipe 4 is connected to an air supply source (for example, blower) 5 via a line L2. Further, an air supply apparatus is constituted by the diffusing pipe 4, the line L2 and the air supply source 5.

Floated solids 9 are present in the water to be treated 2. The floated solid 9 is not particularly restricted so far as it is easy to fluidize in the water to be treated 2, the floated solid 9 having the specific gravity of about 0.5 through 4 is preferable. The particle size of the floated solid 9 is not particularly restricted so far as it is a size which does not cause clogging between contiguous ones of the membrane elements 3 and the size is preferably about 1 through several tens millimeter in view of recovery and prevention of flowing out. The shape of the floated solid 9 is not particularly restricted so far as it does not significantly damage the surface of the membrane and may be a spherical shape, a granular shape, a columnar shape or a hollow shape. As material of the floated solid 9, there are pointed out, for example, plastic of polypropylene, polystyrene, polyurethane or the like, mineral of activated carbon, zeolite or the like and so on, and there can be used also floated solid generally used as an organism adhesion carrier in a biological reactor. Further, a cleaning effect by collision is important for the floated solid 9 and the floated solid 9 is not limited to that having a particularly large surface area as in the organism adhesion carrier. Further, an amount of adding the floated solid 9 to the treatment water tank 1 is about 1 through 25 % in volume ratio. With less than 1 % thereof, the cleaning effect tends to be insufficient and with larger than 25 % thereof, clogging and flocculation tend to become difficult among the membrane elements 3 and the destruction of the membrane face tends to become significant.

Although according to the floated solid, the cleaning effect is achieved by collision with the surface of the membrane element 3, when the collision force of the floated solid 9 exerted on the surface of the membrane element 3 is large, there is a concern of causing the destruction of the membrane and the contaminated water to be treated 2 is discharged as treated water. Particularly, when the apparatus is operated by increasing the filtration rate for saving the membrane used or compact formation of the membrane separation apparatus, the collision force of the floated solid 9 needs to further increase. In this case, an amount of the floated solid 9 charged needs to increase or particles having large collision force needs to use by which damage on the surface of the membrane element 3 becomes more significant. Accordingly, the floated solid 9 needs to collide with the surface of the membrane element 3 pertinently. Further, when the apparatus is operated by increasing the filtration rate, even when adhesion of adhered matters onto the surface by the floated solid 9 is intended to prevent assumedly under a violent condition, clogging of an inner portion of the membrane element 3 is progressed and the membrane separation becomes difficult. The clogging in this case cannot sufficiently be removed only by making the floated solid 9 collide with the membrane element 3.

Hence, the inventors have found that the cause of the membrane clogging at the membrane element 3 is not brought about only at the surface of the membrane of the membrane element 3 but brought about also in pores of the membrane and found that the clogging of the membrane element 3 can effectively be removed by backwashing the membrane element 3 by supplying cleaning water from the inner portion of the membrane element 3. Therefore, the membrane separation apparatus is installed with a cleaning water storing tank 10 for storing cleaning water 14. The cleaning water storing tank 10 and the discharge line L4 are connected to each other via a backwash line L5 and the backwash line L5 is attached with a backwash valve 11 and a backwash pump 12. Accordingly, when the backwash valve 11 is opened and the backwash pump 12 is operated, the cleaning water is supplied to the inner portion of the membrane element 3 via the backwash line L5 and the discharge line L4. Although as the cleaning water 14 stored in the cleaning water storing tank 10, for example, industrial water, treated water or the like is used, in view of promoting the cleaning effect of the membrane element 3, it is preferable to use an aqueous solution mixed with an acid (hydrochloric acid, sulfuric acid, citric acid or the like), an alkali (sodium hydroxide or the like), an oxidant (sodium hypochlorite or the like), a reducing agent, a chelating agent, a surfactant or the like. Further, cleaning water supplying means is constituted by the backwash line L5, the cleaning water storing tank 10, the backwash valve 11 and the backwash pump 12.

Further, it is preferable in view of promoting the cleaning effect of the membrane element 3 by the cleaning water 14 that the backwash line L5, the water collecting pipe L3 or the discharge line L4 is connected to the air supply source 5 or an air supply source installed separately via an air introducing line, not illustrated.

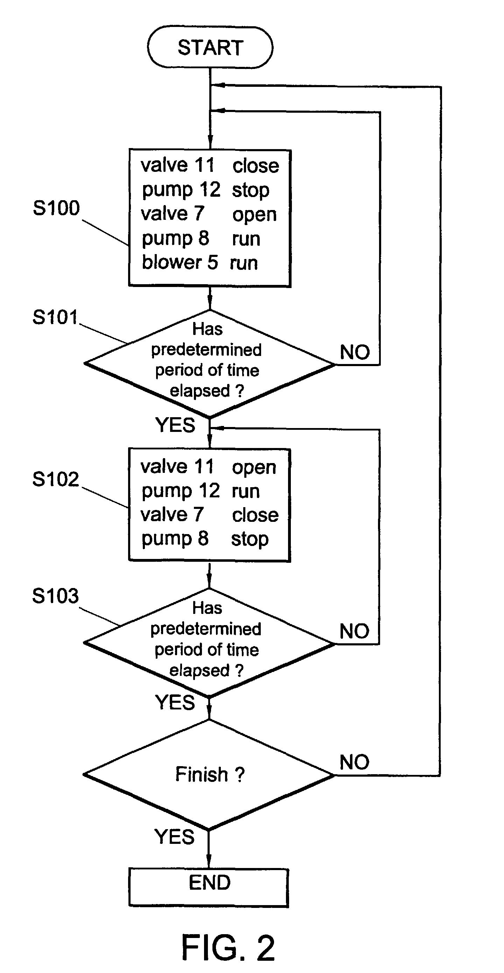

Next, an explanation will be given of the operation of the membrane separation apparatus having the above-described constitution in reference to a flowchart of Fig. 2.

First, there is brought about a state in which the suction pump 8 is operated, the sucking valve 7 is opened, the backwash valve 11 is closed and the backwash pump 12 is stopped. Then, negative pressure is caused at inner portions of the respective membrane elements 3 and the water to be treated 2 is sucked via the membranes of the membrane elements 3. The permeated water is discharged as treated water via the water collecting pipes L3 and the discharge line L4. In this way, membrane separation of the water to be treated 2 is carried out. Meanwhile, the blower 5 constituting the air supply source is operated, air is made to pass through the line L2 and the diffusion pipe 4 to thereby supply the air bubbles 13 to the water to be treated 2. By this, the air bubbles 13 ascend, and the floated solids 9 in the water to be treated 2 are fluidized. At this occasion, the floated solids 9 collide with the surfaces of the respective membrane elements 3 and water flow by air passes through the surfaces of the membrane elements 3. In this way, the water to be treated 2 is subjected to solid/liquid separation, simultaneously therewith, adhered matters onto the surfaces of the membrane elements 3 are prevented from adhering by the floated solids 9 and the water flow to thereby clean the membrane element 3 (S100).

When a predetermined period of time has elapsed after starting the membrane separation, the membrane elements 3 are cleaned as follows (S101) . That is, firstly, there is brought about a state in which the sucking pump 8 is stopped, the sucking valve 7 is closed, the backwash pump 12 is operated and the backwash valve 11 is opened (S102). Thereby, sucking of the water to be treated 2 is stopped and the cleaning water 14 is drawn from the cleaning water storing tank 10. The cleaning water 14 flows into the respective membrane elements 3 via the backwash line L5 and the respective water collecting pipes L3 to simultaneously backwash all of the membrane elements 3. At this occasion, by the cleaning water 14, clogged matters at inner portions of the membrane elements 3 are expelled and further, adhered matters adhered onto the surfaces of the membrane elements 3 are pushed out to the outer side by the cleaning water 14 and expanded. Accordingly, the adhered matters which have expanded are easily peeled off by the floated solids 9 which are fluidized. Accordingly, the membrane separation apparatus can stably be operated without clogging the membrane elements 3. Further, the cleaning operation from the outer portions and the inner portions of the membrane elements 3 is achieved as a synergic effect and accordingly, collision of the floated solids 9 can be carried out under a mild condition and accordingly, destruction of the membrane elements 3 can sufficiently be prevented.

When a predetermined period of time has elapsed and the operation is continued, the backwash pump 12 is stopped, the backwash valve 11 is closed, the sucking pump 8 is operated and the sucking pump 7 is opened (S103). In this way, membrane separation of the water to be treated 2 is again carried out and thereafter, similar operation is repeated.

Although a frequency suitable for carrying out backwashing operation depends on the filtration rate constituting an operational condition, properties of sludge in the water to be treated 2 and a kind of the membrane element 3 used, it is preferable to carry out backwashing operation for a short period of time at every several minutes through several hundreds hours of filtration.

Further, although a rate of supplying the cleaning water 14 in the backwashing operation depends on the membrane element 3 used, the supply rate is preferably one through several hundreds times as much as the filtration rate.

In the backwashing operation, when an aqueous solution of industrial water or treated water mixed with an acid, an alkali, an oxidant, a reducing agent, a chelating agent, a surfactant or the like is used as the cleaning water 14, the cleaning effect is further promoted in comparison with a case in which an acid, an alkali or the like is not added. Further, when a gas of air or the like is introduced into the line L5 and the gas is supplied to the cleaning water 14 in the backwashing operation, the cleaning effect is further promoted.

Further, the backwashing operation of the membrane elements 3 may be carried out by measuring pressure loss of the membrane element 3 and at a time point when the pressure loss is increased (clogging).

Next, an explanation will be given of a second embodiment of a solid/liquid separation apparatus according to the invention.

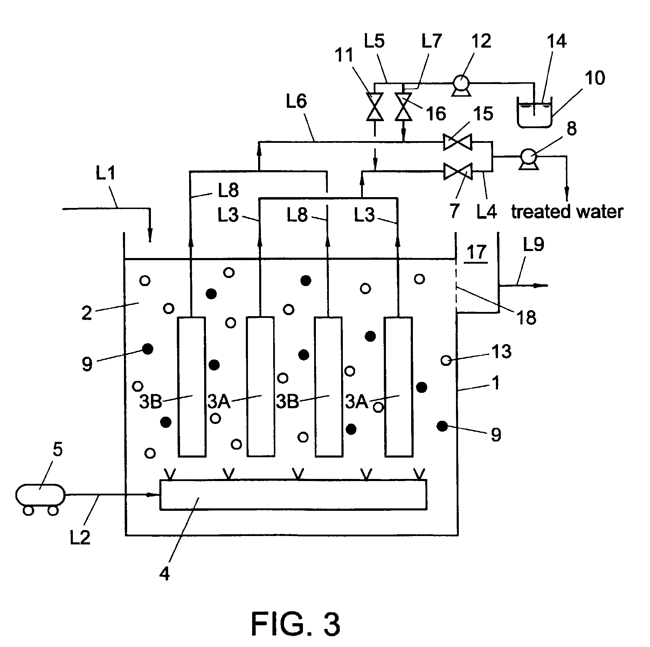

The membrane separation apparatus as the second embodiment of the solid/liquid separation apparatus differs from the membrane separation apparatus according to the first embodiment in the following points. That is, the membrane separation apparatus according to the second embodiment is further provided with at least one (one in Fig. 3) of a discharge line L6 connected to the discharge line L4. The discharge line L6 is connected with at least one sheet (2 sheets in Fig. 3) of membrane elements 3B via water collecting pipes L8 and the discharge line L4 is connected with at least one sheet (2 sheets in Fig. 3) of membrane elements 3A via the water collecting pipes L3. Further, the membrane separation apparatus is installed with backwash lines L7 branched from the backwash line L5 and having a number the same as a number of discharge lines L6 and the backwash line L7 is connected to a corresponding one of the discharge line L6. The discharge line L6 and the backwash line L7 are respectively attached with a sucking valve 15 and a backwash valve 16.

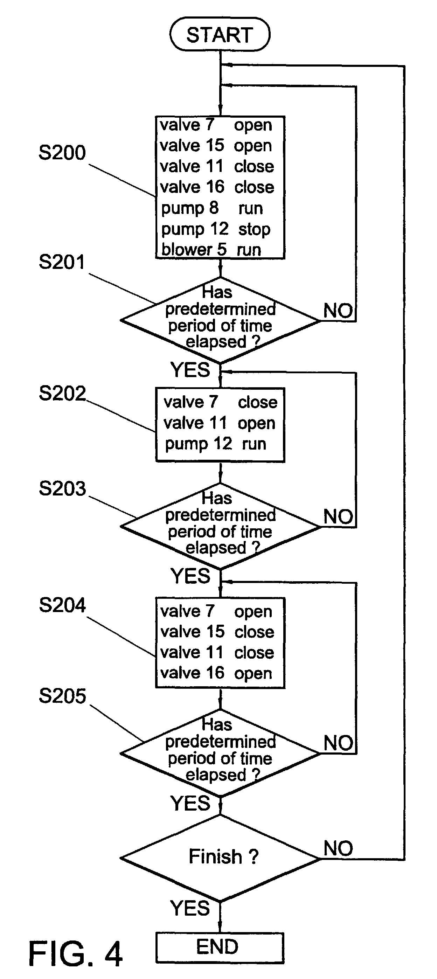

Next, an explanation will be given of a method of cleaning the membrane element 3 using the membrane separation apparatus having the above-described constitution in reference to a flowchart of Fig. 4. The cleaning method differs from the cleaning method according to the first embodiment in that in the backwashing operation, the cleaning water 14 is not supplied simultaneously to the backwash lines L5 and L7 but the cleaning water 14 is supplied successively to the backwash lines L5 and L7. Specifically, the cleaning operation is carried out as follows.

That is, firstly, there is brought about a state in which the sucking valves 7 and 15 are opened, the backwash valves 11 and 16 are closed, the backwash valves 11 and 16 are closed, the sucking pump 8 is operated, the backwash pump 12 is stopped and the blower 5 is operated to thereby carry out membrane separation of the water to be treated 2 (S200).

After a predetermined period of time has elapsed, the membrane elements 3A and 3B are backwashed as follows. First, there is brought about a state in which the sucking valve 7 is closed, the backwash valve 11 is opened and the backwash pump 12 is operated (S201, S202) . Further, the cleaning water 14 is introduced to the discharge line L4 via the backwash line L5 and supplied to insides of the membrane elements 3A via respectives of the water collecting pipes L3. At this occasion, clogged matters at the insides of the membrane elements 3A are expelled and adhered matters are expanded to the outer side and the expanded adhered matters are easily peeled off by the fluidized floated solids 9. At this occasion, the sucking valve 15 stays to be opened and accordingly, the membrane separation of the water to be treated 2 is carried out at the membrane elements 3B.

After a predetermined period of time has elapsed, there is brought about a state in which the sucking valve 7 is opened, the backwash valve 11 and the sucking valve 15 are closed and the backwash valve 16 is opened and the backwash pump 12 and the sucking pump 8 remain to be operated (S203, S204). Then, in this case, membrane separation of the water to be treated 2 is carried out at the membrane elements 3A and the backwashing operation is carried out at the membrane elements 3B.

When a predetermined period of time has elapsed in this way and the operation is continued, there is brought about a state in which the backwash pump 12 is stopped, the backwash valves 11 and 16 are closed and the sucking valves 7 and 15 are opened (S205). When the membrane elements 3A and 3B are backwashed in this way, cleaning of the membrane elements 3A and 3B and continuous treatment of the water to be treated 2 can be carried out simultaneously. Further, in comparison with a case in which all of the membrane elements 3A and 3B are simultaneously backwashed, an amount of supplying the cleaning water 14 is small and accordingly, downsizing of the backwash pump 12 used in supplying the cleaning water 14 can be achieved.

Further, the invention is not limited to the first and the second embodiments mentioned above. For example, although in the above-described embodiments, the backwashing operation is carried out intermittently, the backwashing operation may be carried out successively to every portion of the membrane elements 3 during a time period in which membrane separation is executed. Also in this case, there can be achieved an effect similar to that in the case in which the backwashing operation is carried out intermittently to the respective membrane elements 3 and other portion of the membrane elements 3 is successively backwashed.

Further, there may be carried out the backwashing operation successively from an end one of a plurality of the membrane elements 3 which are parallelly installed by connecting each sheet of the membrane element to each of a plurality of backwash lines via the water collecting pipes L3 and L8.

Further, the cleaning method according to the invention is effectively applicable to solid/liquid separation elements of a filter cloth, a screen, a porous plate (for example, constituted by porous ceramic, punching metal, porous sintered metal or the like), a hollow fiber membrane, a tubular membrane (for example, a cylindrical membrane) and so

As has been explained above, according to the invention, a solid/liquid separation element is backwashed while cleaning the solid/liquid separation element by fluidizing floated solids and accordingly, the clogged matters at an inner portion of the solid/liquid separation element are expelled, further, adhered matters adhered onto the surface of the solid/liquid separation element are expanded to an outer side and are easily peeled off by the floated solids and accordingly, collision of the floated solids can be carried out under a mild condition and clogging of the solid/liquid separation element can sufficiently be prevented.

Next, a further specific explanation will be given of contents of the invention by examples.

### Examples

### Example 1

An explanation will be given of an example in which the method of cleaning a solid/liquid separation element according to the invention is applied to a biological treatment (activated sludge treatment) apparatus of Fig. 1. One piece of a membrane module laminated with 5 sheets of membrane elements each having a membrane area of 0.05 mm² (12.5 cm × 20 cm × 2 (both faces)) with a distance between respective membranes of 13 mm, is dipped in water to be treated having a sludge concentration of about 7000 through 10000 mg/l in a treatment water tank of the biological treatment apparatus. A polyolefin-species high molecular MF membrane is used as the solid/liquid separation element. Further, spherical polypropylene (diameter; about 3 mm) is made to coexist in the water to be treated as floated solids by a rate of 5g/l, while fluidizing the floated solids by supplying air by 4 per minute from below the membrane element, the sucking rate is set to 0.17 l (1m³/m²/d) per minute to thereby carry out the membrane separation. In this case, the sucking is stopped for 3 minutes at every 30 minutes of sucking filtration and conversely, the water is injected to the inner portions of the membrane elements to thereby carry out backwashing operation. The rate of backwashing is set to 0.17 l per minute similar to that in the sucking operation. As a result, there is almost no increase in the membrane pressure difference even after 1 year since start of test and stable operation is made possible. That is, very stable operation is made possible by combining the coexistence of floated solids and backwashing.

### Comparative Example 1

Filtration is carried out similar to Example 1 except that backwashing of injecting water to the inner portions of the membrane elements is not carried out. As a result, the membrane pressure difference is rapidly increased after about 30 days and the membrane clogging is progressed. That is, a long time period of stable operation of the biological treatment apparatus is difficult only with the presence of the floated solids.

### Comparative Example 2

Filtration is carried out similar to Example 1 except that floated solids are not added. As a result, the membrane pressure difference is rapidly increased after about 40 days and clogging of the membrane is caused. That is, a long time period of stable operation of the biological treatment apparatus is difficult only with backwashing of injecting water into the inner portions of the membrane elements.

### Comparative Example 3

Filtration is carried out similar to Example 1 except that neither of addition of the floated solids and the backwashing operation of injecting water to the inner portions of the membrane elements is carried out. As a result, the membrane pressure difference is rapidly increased after about 5 days and clogging of the membrane is progressed significantly fast.

## Claims

1. A method of cleaning a solid/liquid separation element characterized in that in a method of cleaning a solid/liquid separation element for cleaning the solid/liquid separation element arranged to dip in water to be treated in a treatment water tank by fluidizing a floated solid in the water to be treated:
wherein the solid/liquid separation element is backwashed by supplying cleaning water intermittently to an inner portion of the solid/liquid separation element.

2. The method of cleaning a solid/liquid separation element according to Claim 1, characterized in that when the solid/liquid separation element comprises a plurality of solid/liquid separation elements, the solid/liquid separation element is backwashed by successively supplying the cleaning water to every portion of the solid/liquid separation element.

3. The method of cleaning a solid/liquid separation element according to Claim 1, characterized in that when the solid/liquid separation element comprises a plurality of solid/liquid separation elements, the solid/liquid separation element is backwashed by supplying the cleaning water simultaneously to the plurality of solid/liquid separation elements.

4. The method of cleaning a solid/liquid separation element according to any one of Claims 1 through 3, characterized in that a gas is also used in addition to the cleaning water in backwashing the solid/liquid separation element.

5. A method of cleaning a solid/liquid separation element for cleaning a plurality of solid/liquid separation elements arranged to dip in water to be treated in a treatment water tank by fluidizing a floated solid in the water to be treated:
wherein the solid/liquid separation elements are backwashed by supplying cleaning water successively to every portion of the plurality of solid/liquid separation elements.

6. The method of cleaning a solid/liquid separation element according to any one of Claims 1 through 5, characterized in that the solid/liquid separation element is selected from a group consisting of a reverse osmosis membrane, a nano filtration membrane, an ultrafiltration membrane, a micro filtration membrane, a filter cloth, a porous plate and a screen.

7. The method of cleaning a solid/liquid separation element according to any one of Claims 1 through 6, characterized in that as the cleaning water, an aqueous solution including at least one kind selected from a group consisting of an acid, an alkali, a chelating agent, a surfactant, an oxidant and a reducing agent.

8. The method of cleaning a membrane of a membrane separation apparatus according to any one of Claims 1 through 7, characterized in that the membrane element is cleaned by aerating a gas discharged via a plurality of diffusing ports, the diffusing ports for discharging the gas being switched at least one time.

9. A solid/liquid separation apparatus characterized in that in a solid/liquid separation apparatus comprising:
a treatment water tank;
a solid/liquid separation element arranged to dip in water to be treated in the treatment water tank;
a floated solid present in the water to be treated;
an air supply device for fluidizing the floated solid by supplying a gas to the water to be treated; and
discharging means for discharging treated water produced by subjecting the water to be treated to solid/liquid separation by the element for separation from the treatment water tank, further comprising:
cleaning water supplying means for supplying cleaning water to an inner portion of the solid/liquid separation element.

10. The solid/liquid separation apparatus according to Claim 9, characterized in that the solid/liquid separation element comprises a plurality of solid/liquid separation elements and the cleaning water supplying means is capable of supplying the cleaning water to every portion of the solid/liquid separation element.
